# EUROPEAN PATENT APPLICATION

(11) **EP 4 654 691 A1**
(43) Date of publication of application: **26.11.2025**
(21) Application number: 24822657.3
(22) Date of filing: 07.06.2024
(51) Int. Cl.: H04W 64/00, H04W 4/02

(54) **VEHICLE KEY LOCATING METHOD AND APPARATUS, AND VEHICLE AND STORAGE MEDIUM**

(30) Priority: 16.06.2023 CN 202310719234
(71) Applicant: Zhejiang Geely Holding Group Co., Ltd., Hangzhou, Zhejiang 310051 (CN); Geely Automobile Research Institute (Ningbo) Co., Ltd., Ningbo, Zhejiang 315336 (CN)
(72) Inventor: CHEN, Guoan, Ningbo, Zhejiang 315336 (CN)
(74) Representative: Boult Wade Tennant LLP
(86) International application number: PCT/CN2024/098065
(87) International publication number: WO 2024/255707

(57) **Abstract**

The present application provides a vehicle key positioning method and apparatus, a vehicle and a storage medium. According to distances between a vehicle key and multiple positioning anchors of a vehicle, and a preset distance threshold, a first position of the key indicating that the key is in a near field of the vehicle is determined; according to the distances and a pre-trained first machine learning binary classifier, a second position of the key indicating that the key is outside the vehicle is determined; according to the distances and a pre-trained second machine learning binary classifier, a third position of the key indicating that the key is on a side of the vehicle is determined; according to the distances, a pre-trained machine learning regression model and a preset triangular positioning algorithm, final position coordinates of the key relative to the vehicle is determine. By dividing the vehicle area into different hierarchical areas and determining the final position through different manners, the accurate positioning of the vehicle key is achieved.

## Description

The present application claims priority to Chinese Patent Application No. 2023107192340, filed with the China National Intellectual Property Administration on June 16, 2023 and entitled "VEHICLE KEY POSITIONING METHOD AND APPARATUS, VEHICLE, AND STORAGE MEDIUM", which is incorporated herein by reference in its entirety.

### TECHNICAL FIELD

The present application relates to the field of automotive electronics technology, and in particular, to a vehicle key positioning method and apparatus, a vehicle, and a storage medium.

### BACKGROUND

With the advancement of science and technology, the most primitive mechanical car keys have gradually evolved into smart keys that enable keyless entry and ignition. With the application of the security-enhanced Ultra-Wide Band (Ultra-Wide Band, UWB) wireless access technology to car keys, the car keys have entered a new era of comprehensively utilizing the advantages of various wireless technologies. Although the UWB wireless access technology has the characteristics of anti-relay attack and high ranging-positioning accuracy, during operation, UWB is prone to reflection, diffraction, and multipath interference with the vehicle itself or surrounding conductors, thus causing interference and affecting the positioning accuracy of the car keys.

In the prior art, in order to avoid the above problems, the method of machine learning is usually adopted to realize the positioning of a car key. However, the machine learning network has a large scale, large amount of calculation and high requirements for software and hardware resources. The ever-changing actual environment outside the vehicle is quite different from the ideal environment during the collection of training sample data, which leads to a large error in actual outdoor positioning. The large outdoor space and the narrow indoor space of the vehicle result in a too large gap in the number of training sample sets inside and outside the vehicle, which will also lead to problems such as low recognition rate inside the vehicle.

In summary, how to accurately and stably achieve the positioning of a car key is an urgent problem to be solved in this field.

### SUMMARY

The present application provides a vehicle key positioning method and apparatus, a vehicle, and a storage medium, aiming to solve the problem of how to accurately and stably achieve the positioning of a car key.

In a first aspect, the present application provides a vehicle key positioning method, applied to a vehicle, where the method includes:
determining a first position of a vehicle key according to distances between the vehicle key and multiple positioning anchors of the vehicle, and a preset distance threshold, where the first position is used to indicate whether the vehicle key is in a far field of the vehicle or a near field of the vehicle;
if the first position indicates that the vehicle key is in the near field of the vehicle, determining a second position of the vehicle key according to the distances between the vehicle key and the multiple positioning anchors of the vehicle, and a pre-trained first machine learning binary classifier, where the second position is used to indicate whether the vehicle key is outside the vehicle or inside the vehicle, and the first machine learning binary classifier is an algorithm pre-trained based on a set of data collected within a range in a near field of a vehicle for determining a vehicle key position according to distances between a vehicle key and positioning anchors;
if the second position indicates that the vehicle key is outside the vehicle, determining a third position of the vehicle key according to the distances between the vehicle key and the multiple positioning anchors of the vehicle, and a pre-trained second machine learning binary classifier, where the third position is used to indicate whether the vehicle key is on a side of the vehicle or a body of the vehicle, and the second machine learning binary classifier is an algorithm pre-trained based on a set of data collected within a range outside a vehicle for determining a vehicle key position according to distances between a vehicle key and positioning anchors; and
if the third position indicates that the vehicle key is on the side of the vehicle, determining final position coordinates of the vehicle key relative to the vehicle according to the distances between the vehicle key and the multiple positioning anchors of the vehicle, a pre-trained machine learning regression model, and a preset triangular positioning algorithm, where the machine learning regression model is an algorithm pre-trained based on a set of data collected within a range on a side of a vehicle for determining a vehicle key position according to distances between a vehicle key and positioning anchors.

In combination with the first aspect, in some embodiments, the determining final position coordinates of the vehicle key relative to the vehicle according to the distances between the vehicle key and the multiple positioning anchors of the vehicle, a pre-trained machine learning regression model, and a preset triangular positioning algorithm if the third position indicates that the vehicle key is on the side of the vehicle includes:
determining first position coordinates of the vehicle key according to the distances between the vehicle key and the multiple positioning anchors of the vehicle, and the pre-trained machine learning regression model;
determining second position coordinates of the vehicle key according to the distances between the vehicle key and the multiple positioning anchors of the vehicle, and the triangular positioning algorithm; and
determining the final position coordinates of the vehicle key relative to the vehicle according to the first position coordinates and the second position coordinates.

In combination with the first aspect, in some embodiments, the method further includes:
if the first position indicates that the vehicle key is in the far field of the vehicle, determining the final position coordinates of the vehicle key relative to the vehicle according to the distances between the vehicle key and the multiple positioning anchors of the vehicle, and the triangular positioning algorithm.

In combination with the first aspect, in some embodiments, the method further includes:
if the second position indicates that the vehicle key is inside the vehicle, determining that the vehicle key is located in a first sub-area of the vehicle according to the distances between the vehicle key and the multiple positioning anchors of the vehicle, and a pre-trained first machine learning multi-class classifier, where the first sub-area includes a driver area, a front-passenger area, a rear seat area, or a trunk, and the first machine learning multi-class classifier is an algorithm pre-trained based on a set of data collected within a range inside a vehicle for determining a vehicle key position according to distances between a vehicle key and positioning anchors.

In combination with the first aspect, in some embodiments, the method further includes:
if the third position indicates that the vehicle key is on the body of the vehicle, determining that the vehicle key is located in a second sub-area of the vehicle according to the distances between the vehicle key and the multiple positioning anchors of the vehicle, and a pre-trained second machine learning multi-class classifier, where the second sub-area includes an area on an engine hood, a car roof, or a carriage, and the second machine learning multi-class classifier is an algorithm pre-trained based on a set of data collected within a range on a body of a vehicle for determining a vehicle key position according to distances between a vehicle key and positioning anchors.

In combination with the first aspect, in some embodiments, before the determining a first position of a vehicle key according to distances between the vehicle key and multiple positioning anchors of the vehicle, and a preset distance threshold, the method further includes:
obtaining ranging signals between the vehicle key and the multiple positioning anchors of the vehicle; and
determining the distances between the vehicle key and the multiple positioning anchors of the vehicle according to the ranging signals.

In a second aspect, the present application provides a vehicle key positioning apparatus, including:
a first determining module, configured to determine a first position of a vehicle key according to distances between the vehicle key and multiple positioning anchors of a vehicle, and a preset distance threshold, where the first position is used to indicate whether the vehicle key is in a far field of the vehicle or a near field of the vehicle;
a second determining module, configured to, if the first position indicates that the vehicle key is in the near field of the vehicle, determine a second position of the vehicle key according to the distances between the vehicle key and the multiple positioning anchors of the vehicle, and a pre-trained first machine learning binary classifier, where the second position is used to indicate whether the vehicle key is outside the vehicle or inside the vehicle, and the first machine learning binary classifier is an algorithm pre-trained based on a set of data collected within a range in a near field of a vehicle for determining a vehicle key position according to distances between a vehicle key and positioning anchors;
a third determining module, configured to, if the second position indicates that the vehicle key is outside the vehicle, determine a third position of the vehicle key according to the distances between the vehicle key and the multiple positioning anchors of the vehicle, and a pre-trained second machine learning binary classifier, where the third position is used to indicate whether the vehicle key is on a side of the vehicle or a body of the vehicle, and the second machine learning binary classifier is an algorithm pre-trained based on a set of data collected within a range outside a vehicle for determining a vehicle key position according to distances between a vehicle key and positioning anchors; and
a fourth determining module, configured to, if the third position indicates that the vehicle key is on the side of the vehicle, determine final position coordinates of the vehicle key relative to the vehicle according to the distances between the vehicle key and the multiple positioning anchors of the vehicle, a pre-trained machine learning regression model, and a preset triangular positioning algorithm.

In combination with the second aspect, in some embodiments, the fourth determining module includes:
a first determining unit, configured to determine first position coordinates of the vehicle key according to the distances between the vehicle key and the multiple positioning anchors of the vehicle, and the pre-trained machine learning regression model, where the machine learning regression model is an algorithm pre-trained based on a set of data collected within a range on a side of a vehicle for determining a vehicle key position according to distances between a vehicle key and positioning anchors;
a second determining unit, configured to determine second position coordinates of the vehicle key according to the distances between the vehicle key and the multiple positioning anchors of the vehicle, and the triangular positioning algorithm;
a third determining unit, configured to determine the final position coordinates of the vehicle key relative to the vehicle according to the first position coordinates and the second position coordinates.

In combination with the second aspect, in some embodiments, the apparatus further includes:
a fifth determining module, configured to, if the first position indicates that the vehicle key is in the far field of the vehicle, determine the final position coordinates of the vehicle key relative to the vehicle according to the distances between the vehicle key and the multiple positioning anchors of the vehicle, and the triangular positioning algorithm.

In combination with the second aspect, in some embodiments, the apparatus further includes:
a sixth determining module, configured to, if the second position indicates that the vehicle key is inside the vehicle, determine that the vehicle key is located in a first sub-area of the vehicle according to the distances between the vehicle key and the multiple positioning anchors of the vehicle, and a pre-trained first machine learning multi-class classifier, where the first sub-area includes a driver area, a front-passenger area, a rear seat area, or a trunk, and the first machine learning multi-class classifier is an algorithm pre-trained based on a set of data collected within a range inside a vehicle for determining a vehicle key position according to distances between a vehicle key and positioning anchors.

In combination with the second aspect, in some embodiments, the apparatus further includes:
a seventh determining module, configured to, if the third position indicates that the vehicle key is on the body of the vehicle, determine that the vehicle key is located in a second sub-area of the vehicle according to the distances between the vehicle key and the multiple positioning anchors of the vehicle, and a pre-trained second machine learning multi-class classifier, where the second sub-area includes an area on an engine hood, a car roof, or a carriage, and the second machine learning multi-class classifier is an algorithm pre-trained based on a set of data collected within a range on a body of a vehicle for determining a vehicle key position according to distances between a vehicle key and positioning anchors.

In combination with the second aspect, in some embodiments, before the first determining module, the apparatus further includes:
an obtaining module, configured to obtain ranging signals between the vehicle key and the multiple positioning anchors of the vehicle; and
an eighth determining module, configured to determine the distances between the vehicle key and the multiple positioning anchors of the vehicle according to the ranging signals.

In a third aspect, the present application further provides a vehicle, including: a vehicle body, a storage unit arranged in the vehicle body, an electronic control unit, and multiple positioning anchors;
where the storage unit stores computer execution instructions;
the electronic control unit executes the computer execution instructions stored in the storage unit to implement the method according to any of the above aspects.

In a fourth aspect, the present application further provides a computer-readable storage medium, where computer execution instructions are stored in the computer-readable storage medium, and when executed by a processor, the computer execution instructions are configured to implement the method according to any of the above aspects.

In a fifth aspect, the present application provides a computer program product, where the computer program product includes a computer program, and when the computer program is executed by a processor, the method according to any one in the first aspect is implemented.

In the vehicle key positioning method and apparatus, the vehicle and the storage medium provided in the present application, by communicating between the vehicle key and the multiple positioning anchors installed on the body of the vehicle, the distances between the vehicle key and the multiple positioning anchors of the vehicle are obtained. The first position of the vehicle key is determined according to the distances between the vehicle key and the multiple positioning anchors of the vehicle, and the preset distance threshold. If the first position indicates that the vehicle key is in the near field of the vehicle, the second position of the vehicle key is determined according to the distances between the vehicle key and the multiple positioning anchors of the vehicle, and the pre-trained first machine learning binary classifier. If the second position indicates that the vehicle key is outside the vehicle, the third position of the vehicle key is determined according to the distances between the vehicle key and the multiple positioning anchors of the vehicle, and the pre-trained second machine learning binary classifier. If the third position indicates that the vehicle key is on the side of the vehicle, the final position coordinates of the vehicle key relative to the vehicle are determined according to the distances between the vehicle key and the multiple positioning anchors of the vehicle, the pre-trained machine learning regression model, and the preset triangular positioning algorithm. By dividing the vehicle area into multiple area levels, the success rate and accuracy rate of vehicle key position recognition are improved. Moreover, the machine learning regression model and the triangular positioning algorithm are used to fuse and revise the position coordinates of the vehicle key, achieving accurate and stable recognition of the vehicle key.

### BRIEF DESCRIPTION OF DRAWINGS

The accompanying drawings herein are incorporated into the specification and constitute a part of the specification, showing embodiments consistent with the present application. Together with the specification, they are used to explain the principles of the present application.
FIG. 1 is an application scenario diagram of a vehicle key positioning method provided in an embodiment of the present application.
FIG. 2 is a schematic flowchart of Embodiment 1 of a vehicle key positioning method provided in an embodiment of the present application.
FIG. 3 is a schematic diagram of a specific process of a vehicle key positioning method provided in an embodiment of the present application.
FIG. 4 is a schematic diagram of vehicle area division provided in an embodiment of the present application.
FIG. 5 is a schematic flowchart of Embodiment 2 of a vehicle key positioning method provided in an embodiment of the present application.
FIG. 6 is a schematic flowchart of Embodiment 3 of a vehicle key positioning method provided in an embodiment of the present application.
FIG. 7 is a schematic flowchart of Embodiment 4 of a vehicle key positioning method provided in an embodiment of the present application.
FIG. 8 is a schematic diagram of vehicle functional area division provided in an embodiment of the present application.
FIG. 9 is a schematic structural diagram of Embodiment 1 of a vehicle key positioning apparatus provided in an embodiment of the present application.
FIG. 10 is a schematic structural diagram of Embodiment 2 of a vehicle key positioning apparatus provided in an embodiment of the present application.
FIG. 11 is a schematic structural diagram of Embodiment 3 of a vehicle key positioning apparatus provided in an embodiment of the present application.
FIG. 12 is a schematic structural diagram of a vehicle provided in an embodiment of the present application.

Through the above drawings, the specific embodiments of the present application have been shown, and a more detailed description will be given later. These drawings and text descriptions are not intended to limit the scope of the concept of the present application in any way, but to explain the concept of the present application to those skilled in the art with reference to specific embodiments.

### DESCRIPTION OF EMBODIMENTS

Exemplary embodiments will be described in detail here, and examples thereof are shown in the accompanying drawings. When the following description refers to the accompanying drawings, unless otherwise indicated, the same numbers in different drawings represent the same or similar elements. The implementations described in the following exemplary embodiments do not represent all implementations consistent with the present application. On the contrary, they are only examples of apparatuses and methods consistent with some aspects of the present application as detailed in the appended claims.

With the continuous development of the automobile industry, the form and usage manner of keys have also undergone tremendous changes. Nowadays, the most common car key is a smart key. There are various forms of so-called smart keys, and the key is no longer in the form of a traditional key. For example, a card key can unlock a vehicle as long as it is sensed near the door. It is also possible to bind the key with an intelligent terminal, so that there is no need to carry the key when going out next time. All operations can be completed by carrying the intelligent terminal. The communication between the smart key and the vehicle is usually through UWB wireless access technology. The UWB wireless access technology has the technical characteristics of anti-relay attack and high ranging-positioning accuracy. For the problem of smart key positioning, it is usually through machine learning methods. A large number of training samples are collected in different areas outside the vehicle and positions inside the vehicle, and then positioning is performed through the trained model. However, the ever-changing actual environment outside the vehicle is quite different from the ideal environment when collecting training sample data, resulting in a large error in actual outside-of-vehicle positioning. Moreover, the large-scale outside-of-vehicle space and the narrow inside-of-vehicle space make the number of training sample sets inside and outside the vehicle differ too much, thus resulting in problems such as a low inside-of-vehicle recognition rate. If the least squares method is used to position the smart key, and if the smart key is near the vehicle body or inside the vehicle, the positioning output is unstable and the positioning accuracy is low due to factors such as the occlusion of the vehicle body and multiple reflections of radio waves inside the vehicle.

In view of the above problems, the present application provides a vehicle key positioning method, achieving accurate and stable positioning of a vehicle key. Specifically, for the problem of smart key positioning, it is usually to train a machine learning model by collecting a large number of vehicle domain training samples, and positioning is performed through the trained model. However, due to the variability of the actual outside-of-vehicle environment and the large difference in the amount of data collected inside and outside the vehicle, problems such as a low inside-of-vehicle recognition rate occur. If the least squares method is used to position the smart key, the positioning output around the vehicle and inside the vehicle is unstable and the positioning accuracy is low due to factors such as the occlusion of the vehicle body and multiple reflections of radio waves inside the vehicle. Considering these problems, the inventor studied whether it is possible to perform zoned positioning by comprehensively using ranging / machine learning classification (recognition) / machine learning regression (positioning) / triangular positioning algorithm according to the multipath distribution and delay spread characteristics of UWB signal propagation in different environments inside/outside the vehicle. Based on this, the technical solution of the present application is proposed.

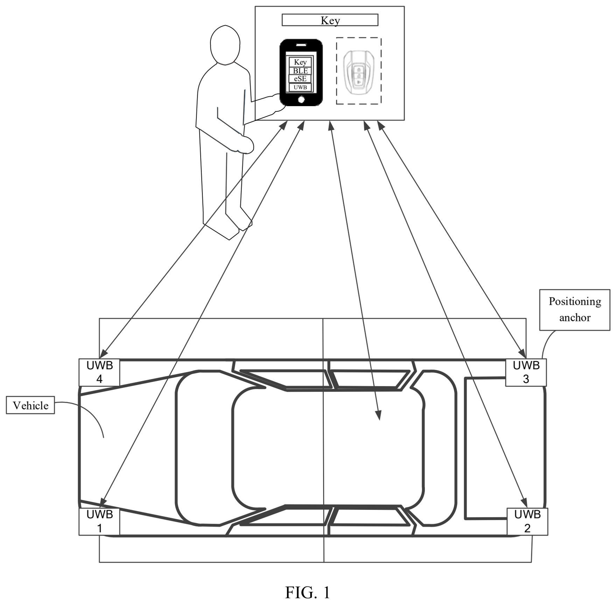

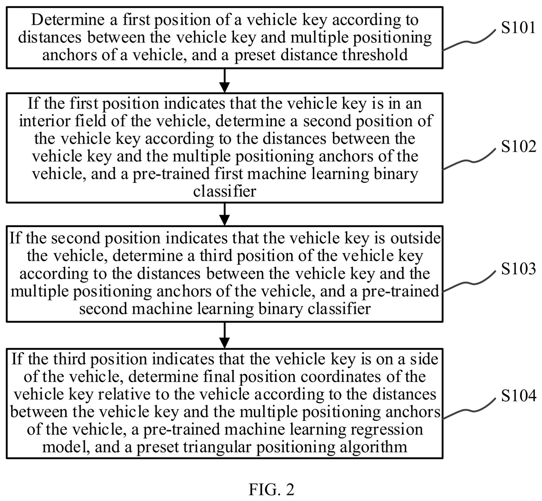

FIG. 1 is an application scenario diagram of a vehicle key positioning method provided in an embodiment of the present application. As shown in FIG. 1, the application scenario includes at least a vehicle and a vehicle key. The vehicle is provided with multiple positioning anchors, such as UWB1, UWB2, UWB3, and UWB4 shown in FIG. 2. Here, the positioning anchors UWB1, UWB2, UWB3, and UWB4 are all located outside the vehicle body, with UWB1 and UWB4 at the two corners of the front of the vehicle, and UWB2 and UWB3 at the two corners of the rear of the vehicle. The positioning anchors are located outside the vehicle body and at the four corners of the front and rear of the vehicle, which can ensure that the ranging signals between the key and the positioning anchors are not blocked by the vehicle body, nor reflected or diffracted by the vehicle body. The positioning anchors are equipped with positioning apparatuses. The positioning apparatuses may determine the distances between the positioning anchors and the vehicle key. Or the positioning anchors are anchors with positioning functions. The positioning apparatus may be a UWB apparatus containing a UWB chip or UWB module. The positioning apparatus may further be a positioning apparatus containing a BLE module or a BLE chip. The vehicle key further contains a BLE module or BLE chip. The vehicle key may be a physical key or a virtual key on a user terminal. The user terminal may be a smart terminal such as a mobile phone, a tablet computer, etc.

In the present application, the specific form and type of the above physical devices are not limited.

The following uses specific embodiments to explain in detail the technical solutions of the present application and how the technical solutions of the present application solve the above technical problems. These specific embodiments can be combined with each other, and the same or similar concepts or processes may not be repeated in some embodiments. The following will describe the embodiments of the present application in combination with the accompanying drawings.

FIG. 2 is a schematic flowchart of Embodiment 1 of a vehicle key positioning method provided in an embodiment of the present application. As shown in FIG. 2, the vehicle key positioning method provided in the present application is applied to a vehicle, and specifically includes the following.

S101, determine a first position of a vehicle key according to distances between the vehicle key and multiple positioning anchors of the vehicle, and a preset distance threshold.

In this step, the UWB wireless technology realizes communication based on electromagnetic wave propagation. At different positions of the vehicle, due to the different presence of conductors, the effectiveness of signal transmission for communication between the vehicle key and the vehicle is different. In order to accurately recognize the specific position of the vehicle key and thus precisely activate the functions of that area, the different positions of the vehicle are hierarchically divided, and the first position of the vehicle key is determined according to the distances between the vehicle key and the multiple positioning anchors of the vehicle, and the preset distance threshold.

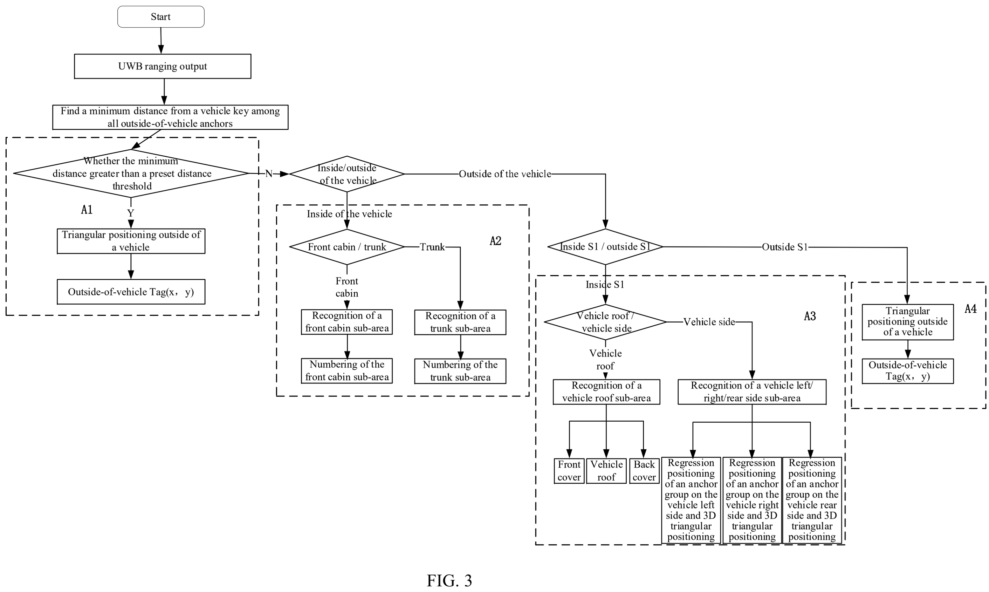

Specifically, as shown in FIG. 3, the vehicle key communicates with the multiple positioning anchors installed on the vehicle. Then, the ranging signals between the vehicle key and the multiple positioning anchors of the vehicle are obtained through the multiple positioning anchors. Next, the distances between the vehicle key and the multiple positioning anchors of the vehicle are determined based on the ranging signals. The shortest distance is selected from the distances between the vehicle key and the multiple positioning anchors, and the shortest distance is compared with the preset distance threshold to determine the first position of the vehicle key. If the shortest distance is greater than the preset distance threshold, the first position indicates that the vehicle is in the far field of the vehicle. If the shortest distance is less than the preset distance threshold, the first position indicates that the vehicle is in the near field of the vehicle.

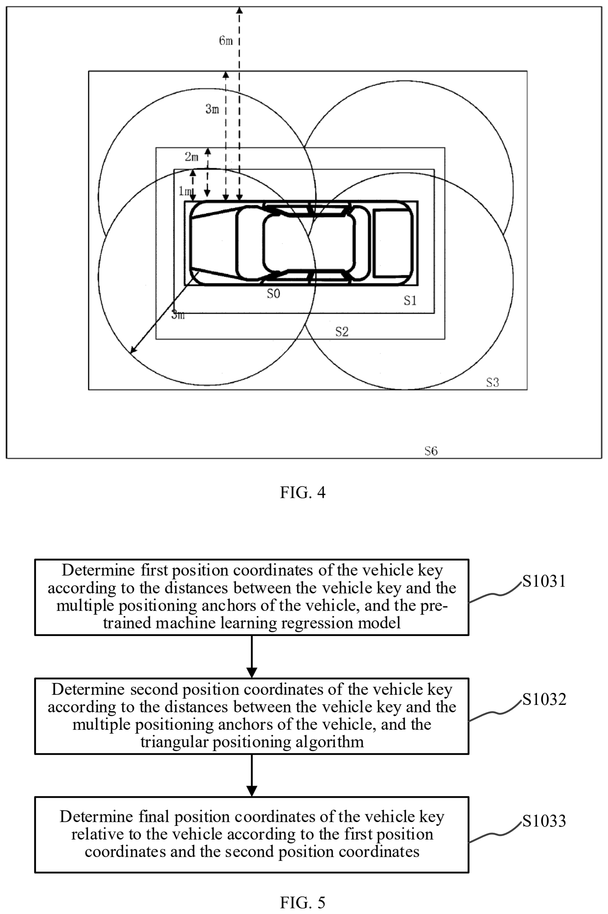

In a specific implementation, as shown in FIG. 4, taking the preset distance threshold as 3 meters and taking 4 positioning anchors as an example, the 4 positioning anchors are respectively arranged at the corners of the front and rear of the vehicle body outside. The area with each of the 4 positioning anchors as the center and 3 meters as the radius is the near field of the vehicle, as shown in the shaded area in FIG. 4. Any area outside the shaded area is the far field of the vehicle.

S102, if the first position indicates that the vehicle key is in the near field of the vehicle, determine a second position of the vehicle key according to the distances between the vehicle key and the multiple positioning anchors of the vehicle, and a pre-trained first machine learning binary classifier.

In this step, by comparing the distances between the vehicle key and the multiple positioning anchors of the vehicle with the preset distance threshold, if it is determined that the first position indicates that the vehicle key is in the near field of the vehicle, the near field of the vehicle is still a relatively complex environment, which may be outside the vehicle close to the vehicle body or inside the vehicle. Similar to the above steps, in order to accurately recognize the positioning, the near field of the vehicle is further divided into different levels. The distances between the vehicle key and the multiple positioning anchors of the vehicle are used as inputs to the pre-trained first machine learning binary classifier to determine the second position of the vehicle key.

Specifically, as shown in FIG. 3, the pre-trained first machine learning binary classifier is a model obtained by training a machine learning binary classifier based on a set of data collected in advance within a range in a near field of a vehicle. The obtained distances between the vehicle key and the multiple positioning anchors of the vehicle are input into the pre-trained first machine learning binary classifier. After processing, a first category value is output, where the first category value represents a value corresponding to the outside of the vehicle or a value corresponding to the inside of the vehicle. If the output is the value corresponding to the outside of the vehicle, the second position indicates that the vehicle key is outside the vehicle. If the output is the value corresponding to the inside of the vehicle, the second position indicates that the vehicle key is inside the vehicle. The category value may be represented by numbers. For example, 0 corresponds to the outside of the vehicle and 1 corresponds to the inside of the vehicle. If the output is 0, it means that the second position indicates that the vehicle key is outside the vehicle. If the output is 1, it means that the second position indicates that the vehicle key is inside the vehicle.

Optionally, through communication between the vehicle key and the multiple positioning anchors, respective Received Signal Strength Indication (Received Signal Strength Indication, RSSI) corresponding to the multiple positioning anchors is obtained. RSSI is used to characterize the communication capability between a corresponding positioning anchor and the vehicle key. Inputting both RSSI and the distances between the vehicle key and the multiple positioning anchors of the vehicle into the pre-trained first machine learning binary classifier can improve the accuracy of the output.

S103, if the second position indicates that the vehicle key is outside the vehicle, determine a third position of the vehicle key according to the distances between the vehicle key and the multiple positioning anchors of the vehicle, and a pre-trained second machine learning binary classifier.

In this step, after the hierarchical division of the near field of the vehicle through the above steps, if the second position indicates that the vehicle key is outside the vehicle, it means that the position of the vehicle key is in the surrounding environment of the vehicle. However, during the communication process between the vehicle key and the multiple positioning anchors, when the ranging signal sent by the vehicle key is a radio frequency signal, the radio frequency signal will experience phenomena such as reflection, multipath interference, diffraction, etc. when encountering conductors such as vehicle body metal parts and nearby human bodies. These phenomena will cause unstable positioning. Therefore, the outside-of-vehicle area is further hierarchically divided, and the distances between the vehicle key and the multiple positioning anchors of the vehicle are used as input to the pre-trained second machine learning binary classifier to determine the third position of the vehicle key.

Specifically, the pre-trained second machine learning binary classifier is a model obtained by training a machine learning binary classifier based on a set of data collected in advance within a range outside a vehicle. The specific analysis process of the model is the same as that of the pre-trained first machine learning binary classifier in the above steps, which will not be repeated here.

Optionally, as shown in FIG. 3, if the second position indicates that the vehicle key is outside the vehicle, the pre-trained machine learning binary classifier may be used to determine whether the vehicle key is within a preset distance range S1 around the vehicle body. If the vehicle key is outside the preset distance range S1 around the vehicle body, it means that the vehicle body has little impact on the signal transmission between the vehicle key and the multiple positioning anchors, and a triangular positioning algorithm is used for positioning and interpretation of the vehicle key. If the vehicle key is within the preset distance range S1 around the vehicle body, the third position of the vehicle key is determined in the above manner. For example, within a distance of 1 meter around the vehicle body, the positioning of the vehicle key is easily affected by the installation positions of the multiple positioning anchors. If there are further positioning anchors installed inside the vehicle, for the positioning of the vehicle key within 1 meter around the vehicle body, it is necessary to involve the distance between the vehicle key and the inside-of-vehicle anchors. Therefore, before determining the third position of the vehicle key, the pre-trained machine learning binary classifier can be used to determine whether the vehicle key is within or outside the distance of 1 meter around the vehicle body.

S104, if the third position indicates that the vehicle key is on a side of the vehicle, determine final position coordinates of the vehicle key relative to the vehicle according to the distances between the vehicle key and the multiple positioning anchors of the vehicle, a pre-trained machine learning regression model, and a preset triangular positioning algorithm.

In this step, the outside-of-vehicle area is hierarchically divided. If the third position indicates that the vehicle key is on the side of the vehicle, due to the occlusion problem of the vehicle body, the pre-trained machine learning regression model and the preset triangular positioning algorithm are used to analyze the distances between the vehicle key and the multiple positioning anchors of the vehicle, and then the final position coordinates of the vehicle key relative to the vehicle are determined. Here, the sides of the vehicle mainly include the left side, the rear side, and the right side of the vehicle. The position coordinates are three-dimensional coordinates.

Specifically, as shown in A3 in FIG. 3, if the vehicle key is located on any side of the above vehicle sides, the pre-trained machine learning regression model is trained based on a set of data collected within a range on a side of a vehicle. The analysis process of the machine learning regression model is similar to that of the machine learning classifier. The distances between the vehicle key and the multiple positioning anchors of the vehicle are input into the pre-trained machine learning regression model. After processing, first position coordinates of the vehicle key are output. According to the distances between the vehicle key and the multiple positioning anchors of the vehicle, an anchor set is determined among the multiple positioning anchors. Then, the distances between the positioning anchors in the anchor set and the key are corrected to obtain corrected distances. The positioning interpretation is performed on the corrected distances, and then second position coordinates of the vehicle key are determined. The first position coordinates and the second position coordinates are averaged, and finally, the final position coordinates of the vehicle key relative to the vehicle are obtained. Here, the anchor set corresponds one-to-one with the respective side of the vehicle.

Optionally, as shown in A3 in FIG. 3, if the third position indicates that the vehicle key is on the side of the vehicle, a pre-trained machine learning multi-class classifier may be used to determine whether the vehicle key is on the left side, the rear side, or the right side of the vehicle. After determining that the vehicle key is on any of the left side, the rear side, or the right side of the vehicle, a corresponding anchor set is determined in the above manner and then positioning calculation is performed on the corresponding anchor set.

In the vehicle key positioning method provided in this embodiment, the first position of the vehicle key is determined according to the distances between the vehicle key and the multiple positioning anchors of the vehicle, and the preset distance threshold. If the first position indicates that the vehicle key is in the near field of the vehicle, the second position of the vehicle key is determined according to the distances between the vehicle key and the multiple positioning anchors of the vehicle, and the pre-trained first machine learning binary classifier. If the second position indicates that the vehicle key is outside the vehicle, the third position of the vehicle key is determined according to the distances between the vehicle key and the multiple positioning anchors of the vehicle, and the pre-trained second machine learning binary classifier. If the third position indicates that the vehicle key is on the side of the vehicle, the final position coordinates of the vehicle key relative to the vehicle are determined according to the distances between the vehicle key and the multiple positioning anchors of the vehicle, the pre-trained machine learning regression model, and the preset triangular positioning algorithm. By dividing the environment around the vehicle into area levels and processing the side near the vehicle using the pre-trained machine learning regression model and the preset triangular positioning algorithm, the positioning accuracy of the vehicle key is improved and the recognition efficiency is enhanced.

FIG. 5 is a schematic flowchart of Embodiment 2 of a vehicle key positioning method provided in an embodiment of the present application. As shown in FIG. 5, on the basis of the above embodiment, step S103 includes the following.

S1031, determine first position coordinates of the vehicle key according to the distances between the vehicle key and the multiple positioning anchors of the vehicle, and the pre-trained machine learning regression model.

In this step, in order to determine the first position coordinates of the vehicle key, the distances between the vehicle key and the multiple positioning anchors of the vehicle are input into the pre-trained machine learning regression model. After processing, the first position coordinates of the vehicle key are obtained.

Specifically, the pre-trained machine learning regression model may be obtained by training based on any of a linear regressor, a logistic regressor, and a stepwise regressor. Taking the pre-trained machine learning regression model trained based on the linear regressor as an example, the distances between the vehicle key and the multiple positioning anchors of the vehicle are input into the pre-trained machine learning regression model. Let the input distances between the vehicle key and the multiple positioning anchors of the vehicle be X, and the output be Y. Then, according to the formula *Y = b + ωX ,* the first position coordinates of the vehicle key are obtained. In the formula, b is the intercept, and *ω* is the weight. Both b and *ω* are obtained during the training process.

S1032, determine second position coordinates of the vehicle key according to the distances between the vehicle key and the multiple positioning anchors of the vehicle, and the triangular positioning algorithm.

In this step, in order to reduce the inaccurate and unstable positioning caused by multipath interference, diffraction, and reflection, the second position coordinates of the vehicle key are determined through the triangular positioning algorithm.

Specifically, according to the distances between the vehicle key and the multiple positioning anchors of the vehicle, at least two positioning anchors with the transmission mode of the ranging signal being a non-occluded transmission mode are selected from the multiple positioning anchors as reference anchors. If the number of the reference anchors exceeds two and the determined reference anchors are collinear, two reference anchors with the maximum distance between them are determined as target reference anchors. If the number of the reference anchors exceeds two and the determined reference anchors are not collinear, two adjacent reference anchors whose connection line is parallel to the ground are determined as the target reference anchors. If the number of the reference anchors exceeds two and the determined reference anchors are not collinear, the two adjacent reference anchors with the minimum sum of the distances between each of them and the vehicle key are determined as the target reference anchors. Taking the connection line of the two target reference anchors as the X-axis and one of the target reference anchors on the X-axis as the coordinate origin, a local coordinate system is determined. Based on the distances between each of the two target reference anchors and the vehicle key, and the distance between the two target reference anchors, the first coordinates of the vehicle key in the local coordinate system are determined. Then, the first coordinates are transformed to obtain the second position coordinates.

S1033, determine the final position coordinates of the vehicle key relative to the vehicle according to the first position coordinates and the second position coordinates.

In this step, after obtaining the first position coordinates and the second position coordinates of the vehicle key through different methods, in order to make the positioning of the vehicle key more accurate and stable, the first position coordinates and the second position coordinates are averaged, and then the final position coordinates of the vehicle key relative to the vehicle are obtained.

In the vehicle key positioning method provided in this embodiment, the first position coordinates of the vehicle key are determined according to the distances between the vehicle key and the multiple positioning anchors of the vehicle, and the pre-trained machine learning regression model. The second position coordinates of the vehicle key are determined according to the distances between the vehicle key and the multiple positioning anchors of the vehicle, and the triangular positioning algorithm. The final position coordinates of the vehicle key relative to the vehicle are determined according to the first position coordinates and the second position coordinates. For the position of the vehicle key on the side of the vehicle, the results of the pre-trained machine learning regression model and the triangular positioning algorithm are fused, which improves the stability of the vehicle key and increases the accuracy.

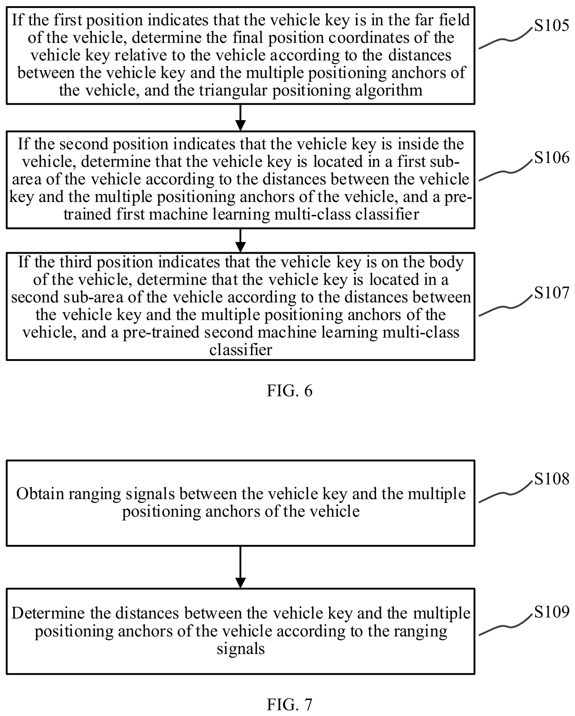

FIG. 6 is a schematic flowchart of Embodiment 3 of a vehicle key positioning method provided in an embodiment of the present application. As shown in FIG. 6, on the basis of the above Embodiment 1, the vehicle key positioning method provided in the present application further includes the following.

S105, if the first position indicates that the vehicle key is in the far field of the vehicle, determine the final position coordinates of the vehicle key relative to the vehicle according to the distances between the vehicle key and the multiple positioning anchors of the vehicle, and the triangular positioning algorithm.

In this step, as shown in A1 in FIG. 3, through the preliminary determination of the hierarchical level of the vehicle key, if the first position indicates that the vehicle key is in the far field of the vehicle, the final position coordinates of the vehicle key relative to the vehicle are determined according to the distances between the vehicle key and the multiple positioning anchors of the vehicle, and the triangular positioning algorithm. The specific processing procedure is the same as that of step S1032 in the above embodiment, which will not be repeated here.

S106, if the second position indicates that the vehicle key is inside the vehicle, determine that the vehicle key is located in a first sub-area of the vehicle according to the distances between the vehicle key and the multiple positioning anchors of the vehicle, and a pre-trained first machine learning multi-class classifier.

S107, if the third position indicates that the vehicle key is on the body of the vehicle, determine that the vehicle key is located in a second sub-area of the vehicle according to the distances between the vehicle key and the multiple positioning anchors of the vehicle, and a pre-trained second machine learning multi-class classifier.

In steps S106 and S107, the hierarchical division is performed on the vehicle area. In this hierarchical division, the second position indicates that the vehicle key is inside the vehicle, and the third position indicates that the vehicle key is on the vehicle body. When the vehicle key is inside the vehicle or on the vehicle body, it is interfered by insufficient radio frequency signal transmission. In order to accurately determine the specific positioning of the vehicle key, the set of data within the inside-of-vehicle range and the set of data within the vehicle body range are respectively collected in advance. For the second position indicating that the vehicle key is inside the vehicle, as shown in A2 in FIG. 3, based on the set of data within the inside-of-vehicle range, a machine learning multi-class classifier is trained respectively to obtain the pre-trained first machine learning multi-class classifier. Then, the distances between the vehicle key and the multiple positioning anchors of the vehicle are input into the pre-trained first machine learning multi-class classifier, and a second category value is output. The second category value represents a value corresponding to the first sub-area of the vehicle where the vehicle key is located. The first sub-area includes a driver area, a front-passenger area, a rear seat area, or a trunk. For the third position indicating that the vehicle key is on the vehicle body, as shown in A3 in FIG. 3, based on the set of data within the vehicle body range, the machine learning multi-class classifier is trained respectively to obtain the pre-trained second machine learning multi-class classifier. Then, the distances between the vehicle key and the multiple positioning anchors of the vehicle are input into the pre-trained second machine learning multi-class classifier, and a third category value is output. The third category value represents the value corresponding to the second sub-area of the vehicle where the vehicle key is located. The second sub-area includes an area on an engine hood, a car roof, or a carriage.

Optionally, in step S106, the inside-of-vehicle space is narrow, and the positioning of the vehicle key is quite inaccurate. In order to make the positioning of the vehicle key more accurate, as shown in A2 in FIG. 3, sets of data within the range of the front cabin inside the vehicle and within the range of the trunk are collected in advance to train the machine learning classifier. The trained model is used to determine whether the vehicle key is located in the front cabin or the trunk of the vehicle. The specific process is the same as the processing procedure of the aforementioned machine learning classifier, which will not be repeated here.

In step S107, the vehicle body further includes an area with a certain reserved distance above the vehicle body, such as an area with a certain reserved distance above the vehicle engine hood, roof, or trunk.

In a specific implementation, taking the value corresponding to the driver area as 3, the value corresponding to the front-passenger area as 4, the value corresponding to the rear seat area as 5, and the value corresponding to the trunk as 6 as an example. If the output is 3, it is determined that the vehicle key is located in the driver area of the vehicle. If the output is 4, it is determined that the vehicle key is located in the front-passenger area of the vehicle. If the output is 5, it is determined that the vehicle key is located in the rear seat area of the vehicle. If the output is 6, it is determined that the vehicle key is located in the trunk of the vehicle.

In the vehicle key positioning method provided in this embodiment, if the first position indicates that the vehicle key is in the far field of the vehicle, the final position coordinates of the vehicle key relative to the vehicle are determined according to the distances between the vehicle key and the multiple positioning anchors of the vehicle, and the triangular positioning algorithm. If the second position indicates that the vehicle key is inside the vehicle, the vehicle key is determined to be located in the first sub-area of the vehicle according to the distances between the vehicle key and the multiple positioning anchors of the vehicle, and the pre-trained first machine learning multi-class classifier. If the third position indicates that the vehicle key is on the vehicle body, the vehicle key is determined to be located in the second sub-area of the vehicle according to the distances between the vehicle key and the multiple positioning anchors of the vehicle, and the pre-trained second machine learning multi-class classifier. By performing hierarchical division on the vehicle area, the recognition and accuracy of the vehicle key positioning are improved.

FIG. 7 is a schematic flowchart of Embodiment 4 of a vehicle key positioning method provided in an embodiment of the present application. As shown in FIG. 7, on the basis of the above Embodiment 1, before step S101, the method further includes the following.

S108, obtain ranging signals between the vehicle key and the multiple positioning anchors of the vehicle.

In this step, after the vehicle key is communicatively connected to the vehicle, the positioning apparatuses on the multiple positioning anchors of the vehicle start a ranging operation. The vehicle key sends ranging signals to the multiple positioning anchors, and the vehicle obtains the ranging signals between the vehicle key and the multiple positioning anchors of the vehicle.

S109, determine the distances between the vehicle key and the multiple positioning anchors of the vehicle according to the ranging signals.

In this step, after the vehicle obtains the ranging signals, the distances between the vehicle key and the multiple positioning anchors of the vehicle are obtained by multiplying a propagation time by a speed of light.

In the vehicle key positioning method provided in this embodiment, by obtaining the ranging signals between the vehicle key and the multiple positioning anchors of the vehicle, and by determining the distances between the vehicle key and the multiple positioning anchors of the vehicle according to the ranging signals, the wireless communication between the vehicle key and the vehicle is realized.

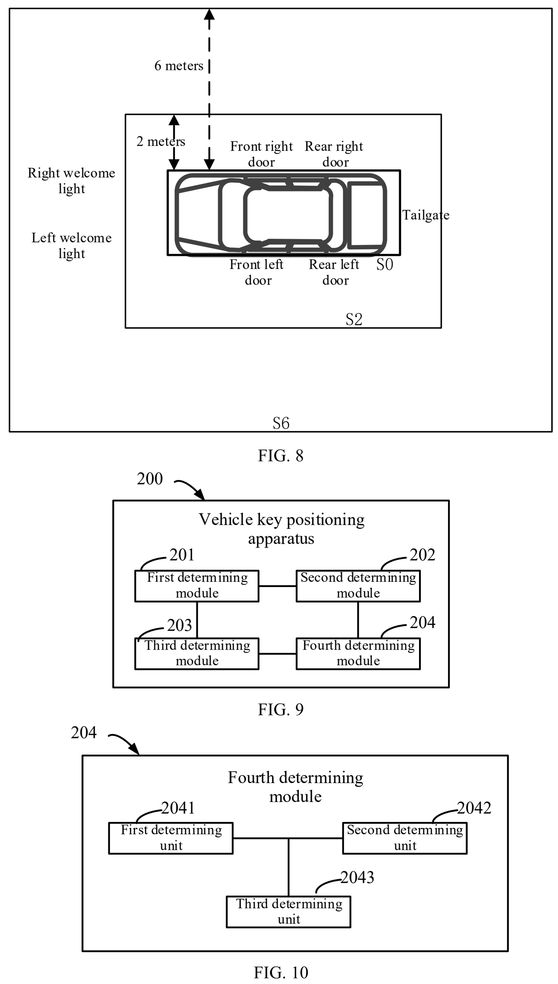

As shown in FIG. 8, after the vehicle key enters S6, welcome lights/welcome music, etc., need to be turned on. According to the left/right information of the key, the puddle lamp on the side where the user is located may further be turned on. After the vehicle key enters S2 meters (the range within 0 to 2 meters from the contour line), there are many functional areas, such as front left door / rear left door / front right door / rear right door / left tailgate / right tailgate, etc. When in the left/right door area, the corresponding side door should be opened. When in the tailgate area, according to the sequence of the user staying in the tailgate sub-area and the staying time, the staying trajectory pattern of the user holding the key may be formed for opening the tailgate/lighting, etc. Based on the high-precision positioning capability of UWB, different functions, the range of sub-functional areas for implementing the functions, and the action sequence descriptions for implementing different functions may be defined in different vehicle models.

In the vehicle key positioning method provided in the embodiments of the present application, regarding the machine learning classifier involved in the above embodiments, it should be noted that for machine learning-neural network decision-makers with different functions, it is necessary to separately collect training sample sets and train the network separately to obtain dedicated network weights; the area for collecting training sample data should be consistent with the area that needs to be actually classified. For example, for a classifier that determines whether inside/outside the vehicle, data should be collected at various positions inside the vehicle (front cabin + trunk) as inside-of-vehicle samples, and at various positions outside the vehicle (including the front engine hood, trunk lid, outside of the windows, roof within the contour line, and at different positions and within a certain height range in different ranges outside the contour line such as 0~1 meter, 1~2 meters, 2~3 meters, 3~6 meters as shown in FIG. 4) as outside-of-vehicle samples. After training, the weights of the network are obtained; the hyperparameters of the classifier network with different functions (such as the number of hidden layers, the number of nodes in each layer, etc.) need to be set through experiments according to the requirements of indicators such as recognition accuracy, which can be the same or different.

FIG. 9 is a schematic structural diagram of Embodiment 1 of a vehicle key positioning apparatus provided in an embodiment of the present application. As shown in FIG. 9, the vehicle key positioning apparatus 200 includes:
a first determining module 201, configured to determine a first position of a vehicle key according to distances between the vehicle key and multiple positioning anchors of a vehicle, and a preset distance threshold, where the first position is used to indicate whether the vehicle key is in a far field of the vehicle or a near field of the vehicle;
a second determining module 202, configured to, if the first position indicates that the vehicle key is in the near field of the vehicle, determine a second position of the vehicle key according to the distances between the vehicle key and the multiple positioning anchors of the vehicle, and a pre-trained first machine learning binary classifier, where the second position is used to indicate whether the vehicle key is outside the vehicle or inside the vehicle, and the first machine learning binary classifier is an algorithm pre-trained based on a set of data collected within a range in a near field of a vehicle for determining a vehicle key position according to distances between a vehicle key and positioning anchors;
a third determining module 203, configured to, if the second position indicates that the vehicle key is outside the vehicle, determine a third position of the vehicle key according to the distances between the vehicle key and the multiple positioning anchors of the vehicle, and a pre-trained second machine learning binary classifier, where the third position is used to indicate whether the vehicle key is on a side of the vehicle or a body of the vehicle, and the second machine learning binary classifier is an algorithm pre-trained based on a set of data collected within a range outside a vehicle for determining a vehicle key position according to distances between a vehicle key and positioning anchors; and
a fourth determining module 204, configured to, if the third position indicates that the vehicle key is on the side of the vehicle, determine final position coordinates of the vehicle key relative to the vehicle according to the distances between the vehicle key and the multiple positioning anchors of the vehicle, a pre-trained machine learning regression model, and a preset triangular positioning algorithm, where the machine learning regression model is an algorithm pre-trained based on a set of data collected within a range on a side of a vehicle for determining a vehicle key position according to distances between a vehicle key and positioning anchors.

FIG. 10 is a schematic structural diagram of Embodiment 2 of a vehicle key positioning apparatus provided in an embodiment of the present application. As shown in FIG. 10, the fourth determining module 204 includes:
a first determining unit 2041, configured to determine first position coordinates of the vehicle key according to the distances between the vehicle key and the multiple positioning anchors of the vehicle, and the pre-trained machine learning regression model;
a second determining unit 2042, configured to determine second position coordinates of the vehicle key according to the distances between the vehicle key and the multiple positioning anchors of the vehicle, and the triangular positioning algorithm; and
a third determining unit 2043, configured to determine the final position coordinates of the vehicle key relative to the vehicle according to the first position coordinates and the second position coordinates.

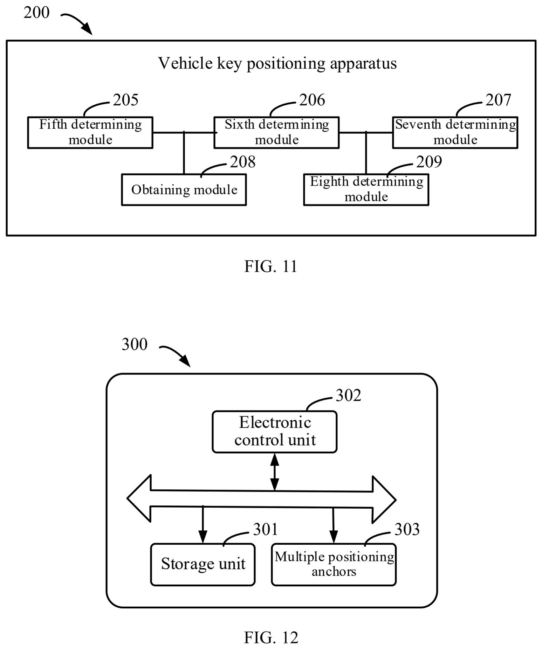

FIG. 11 is a schematic structural diagram of Embodiment 3 of a vehicle key positioning apparatus provided in an embodiment of the present application. As shown in FIG. 11, the vehicle key positioning apparatus 200 further includes the following.
a fifth determining module 205, configured to, if the first position indicates that the vehicle key is in the far field of the vehicle, determine the final position coordinates of the vehicle key relative to the vehicle according to the distances between the vehicle key and the multiple positioning anchors of the vehicle, and the triangular positioning algorithm;
a sixth determining module 206, configured to, if the second position indicates that the vehicle key is inside the vehicle, determine that the vehicle key is located in a first sub-area of the vehicle according to the distances between the vehicle key and the multiple positioning anchors of the vehicle, and a pre-trained first machine learning multi-class classifier, where the first sub-area includes a driver area, a front-passenger area, a rear seat area, or a trunk, and the first machine learning multi-class classifier is an algorithm pre-trained based on a set of data collected within a range inside a vehicle for determining a vehicle key position according to distances between a vehicle key and positioning anchors;
a seventh determining module 207, configured to, if the third position indicates that the vehicle key is on the body of the vehicle, determine that the vehicle key is located in a second sub-area of the vehicle according to the distances between the vehicle key and the multiple positioning anchors of the vehicle, and a pre-trained second machine learning multi-class classifier, where the second sub-area includes an area on an engine hood, a car roof, or a carriage, and the second machine learning multi-class classifier is an algorithm pre-trained based on a set of data collected within a range on a body of a vehicle for determining a vehicle key position according to distances between a vehicle key and positioning anchors;
an obtaining module 208, configured to obtain ranging signals between the vehicle key and the multiple positioning anchors of the vehicle; and
an eighth determining module 209, configured to determine the distances between the vehicle key and the multiple positioning anchors of the vehicle according to the ranging signals.

The vehicle key positioning apparatus provided in this embodiment is used to execute the vehicle key positioning method in any of the foregoing method embodiments. Its implementation principle and technical effects are similar, which will not be repeated here.

FIG. 12 is a schematic structural diagram of a vehicle provided in an embodiment of the present application. As shown in FIG. 12, the vehicle includes: a vehicle body 300, a storage unit 301 arranged in the vehicle body, an electronic control unit 302, and multiple positioning anchors 303.

The storage unit 301 computer execution instructions.

The electronic control unit 302 executes the computer execution instructions stored in the storage unit 301 to implement the method in any of the embodiments.

The multiple positioning anchors 303 are used to implement communication between the vehicle and a vehicle key.

An embodiment of the present application further provides a computer-readable storage medium, where computer execution instructions are stored in the computer-readable storage medium, and when executed by a processor, the computer execution instructions are used to implement the method in any of the embodiments.

The above-mentioned computer-readable storage medium may be implemented by any type of volatile or non-volatile storage device or a combination thereof, such as static random access memory, electrically erasable programmable read-only memory, erasable programmable read-only memory, programmable read-only memory, read-only memory, magnetic memory, flash memory, magnetic disk or optical disc. The readable storage medium may be any available medium accessible by a general-purpose or special-purpose computer.

Optionally, the readable storage medium is coupled to the processor, so that the processor can read information from the readable storage medium and can write information to the readable storage medium. Of course, the readable storage medium may further be a component of the processor. The processor and the readable storage medium may be located in Application Specific Integrated Circuits (Application Specific Integrated Circuits, ASIC). Of course, the processor and the readable storage medium may further exist as discrete components in the device.

An embodiment of the present application further provides a computer program product, where the computer program product includes a computer program, which is stored in a computer-readable storage medium, where at least one processor may read the computer program from the computer-readable storage medium, and when the at least one processor executes the computer program, the technical solution provided in any of the above method embodiments is able to be implemented.

Those skilled in the art will easily think of other embodiments of the present application after considering the specification and practicing the invention disclosed herein. The present application is intended to cover any modifications, uses, or adaptive changes of the present application. These modifications, uses, or adaptive changes follow the general principles of the present application and include common knowledge or conventional technical means in the technical field not disclosed in the present application. The specification and embodiments are only regarded as exemplary, and the true scope and spirit of the present application are pointed out by the following claims.

It should be understood that the present application is not limited to the precise structure described above and shown in the drawings, and various modifications and changes can be made without departing from its scope. The scope of the present application is only limited by the appended claims.

## Claims

1. A vehicle key positioning method, applied to a vehicle, wherein the method comprises:
determining a first position of a vehicle key according to distances between the vehicle key and multiple positioning anchors of the vehicle, and a preset distance threshold, wherein the first position is used to indicate whether the vehicle key is in a far field of the vehicle or a near field of the vehicle;
if the first position indicates that the vehicle key is in the near field of the vehicle, determining a second position of the vehicle key according to the distances between the vehicle key and the multiple positioning anchors of the vehicle, and a pre-trained first machine learning binary classifier, wherein the second position is used to indicate whether the vehicle key is outside the vehicle or inside the vehicle, and the first machine learning binary classifier is an algorithm pre-trained based on a set of data collected within a range in a near field of a vehicle for determining a vehicle key position according to distances between a vehicle key and positioning anchors;
if the second position indicates that the vehicle key is outside the vehicle, determining a third position of the vehicle key according to the distances between the vehicle key and the multiple positioning anchors of the vehicle, and a pre-trained second machine learning binary classifier, wherein the third position is used to indicate whether the vehicle key is on a side of the vehicle or a body of the vehicle, and the second machine learning binary classifier is an algorithm pre-trained based on a set of data collected within a range outside a vehicle for determining a vehicle key position according to distances between a vehicle key and positioning anchors; and
if the third position indicates that the vehicle key is on the side of the vehicle, determining final position coordinates of the vehicle key relative to the vehicle according to the distances between the vehicle key and the multiple positioning anchors of the vehicle, a pre-trained machine learning regression model, and a preset triangular positioning algorithm, wherein the machine learning regression model is an algorithm pre-trained based on a set of data collected within a range on a side of a vehicle for determining a vehicle key position according to distances between a vehicle key and positioning anchors.

2. The method according to claim 1, wherein the determining final position coordinates of the vehicle key relative to the vehicle according to the distances between the vehicle key and the multiple positioning anchors of the vehicle, a pre-trained machine learning regression model, and a preset triangular positioning algorithm if the third position indicates that the vehicle key is on the side of the vehicle comprises:
determining first position coordinates of the vehicle key according to the distances between the vehicle key and the multiple positioning anchors of the vehicle, and the pre-trained machine learning regression model;
determining second position coordinates of the vehicle key according to the distances between the vehicle key and the multiple positioning anchors of the vehicle, and the triangular positioning algorithm; and
determining the final position coordinates of the vehicle key relative to the vehicle according to the first position coordinates and the second position coordinates.

3. The method according to claim 1 or 2, wherein the method further comprises:
if the first position indicates that the vehicle key is in the far field of the vehicle, determining the final position coordinates of the vehicle key relative to the vehicle according to the distances between the vehicle key and the multiple positioning anchors of the vehicle, and the triangular positioning algorithm.

4. The method according to claim 1 or 2, wherein the method further comprises:
if the second position indicates that the vehicle key is inside the vehicle, determining that the vehicle key is located in a first sub-area of the vehicle according to the distances between the vehicle key and the multiple positioning anchors of the vehicle, and a pre-trained first machine learning multi-class classifier, wherein the first sub-area comprises a driver area, a front-passenger area, a rear seat area, or a trunk, and the first machine learning multi-class classifier is an algorithm pre-trained based on a set of data collected within a range inside a vehicle for determining a vehicle key position according to distances between a vehicle key and positioning anchors.

5. The method according to claim 1 or 2, wherein the method further comprises:
if the third position indicates that the vehicle key is on the body of the vehicle, determining that the vehicle key is located in a second sub-area of the vehicle according to the distances between the vehicle key and the multiple positioning anchors of the vehicle, and a pre-trained second machine learning multi-class classifier, wherein the second sub-area comprises an area on an engine hood, a car roof, or a carriage, and the second machine learning multi-class classifier is an algorithm pre-trained based on a set of data collected within a range on a body of a vehicle for determining a vehicle key position according to distances between a vehicle key and positioning anchors.

6. The method according to claim 1, wherein before the determining a first position of a vehicle key according to distances between the vehicle key and multiple positioning anchors of the vehicle, and a preset distance threshold, the method further comprises:
obtaining ranging signals between the vehicle key and the multiple positioning anchors of the vehicle; and
determining the distances between the vehicle key and the multiple positioning anchors of the vehicle according to the ranging signals.

7. A vehicle key positioning apparatus, comprising:
a first determining module, configured to determine a first position of a vehicle key according to distances between the vehicle key and multiple positioning anchors of a vehicle, and a preset distance threshold, wherein the first position is used to indicate whether the vehicle key is in a far field of the vehicle or a near field of the vehicle;
a second determining module, configured to, if the first position indicates that the vehicle key is in the near field of the vehicle, determine a second position of the vehicle key according to the distances between the vehicle key and the multiple positioning anchors of the vehicle, and a pre-trained first machine learning binary classifier, wherein the second position is used to indicate whether the vehicle key is outside the vehicle or inside the vehicle, and the first machine learning binary classifier is an algorithm pre-trained based on a set of data collected within a range in a near field of a vehicle for determining a vehicle key position according to distances between a vehicle key and positioning anchors;
a third determining module, configured to, if the second position indicates that the vehicle key is outside the vehicle, determine a third position of the vehicle key according to the distances between the vehicle key and the multiple positioning anchors of the vehicle, and a pre-trained second machine learning binary classifier, wherein the third position is used to indicate whether the vehicle key is on a side of the vehicle or a body of the vehicle, and the second machine learning binary classifier is an algorithm pre-trained based on a set of data collected within a range outside a vehicle for determining a vehicle key position according to distances between a vehicle key and positioning anchors; and
a fourth determining module, configured to, if the third position indicates that the vehicle key is on the side of the vehicle, determine final position coordinates of the vehicle key relative to the vehicle according to the distances between the vehicle key and the multiple positioning anchors of the vehicle, a pre-trained machine learning regression model, and a preset triangular positioning algorithm, wherein the machine learning regression model is an algorithm pre-trained based on a set of data collected within a range on a side of a vehicle for determining a vehicle key position according to distances between a vehicle key and positioning anchors.

8. The apparatus according to claim 7, wherein the fourth determining module comprises:
a first determining unit, configured to determine first position coordinates of the vehicle key according to the distances between the vehicle key and the multiple positioning anchors of the vehicle, and the pre-trained machine learning regression model;
a second determining unit, configured to determine second position coordinates of the vehicle key according to the distances between the vehicle key and the multiple positioning anchors of the vehicle, and the triangular positioning algorithm; and
a third determining unit, configured to determine the final position coordinates of the vehicle key relative to the vehicle according to the first position coordinates and the second position coordinates.

9. A vehicle, comprising: a vehicle body, a storage unit arranged in the vehicle body, an electronic control unit, and multiple positioning anchors;
wherein the storage unit stores computer execution instructions;
the electronic control unit executes the computer execution instructions stored in the storage unit to implement the method according to any one of claims 1 to 6.

10. A computer-readable storage medium, wherein computer execution instructions are stored in the computer-readable storage medium, and when executed by a processor, the computer execution instructions are configured to implement the vehicle key positioning method according to any one of claims 1 to 6.
